**Europäisches Patentamt**

**European Patent Office**

**Office européen des brevets**

(19)

(11) Veröffentlichungsnummer: **0 095 438**
**B1**

(12) # EUROPÄISCHE PATENTSCHRIFT

(45) Veröffentlichungstag der Patentschrift:
**16.07.86**

(21) Anmeldenummer: **83710028.8**

(22) Anmeldetag: **18.05.83**

(51) Int. Cl.⁴: **G 01 M 11/04**

(54) **Bausatz zum Aufbau einer mikrooptischen Bank.**

(30) Priorität: **24.05.82 DE 3219399**

(43) Veröffentlichungstag der Anmeldung:
**30.11.83 Patentblatt 83/48**

(45) Bekanntmachung des Hinweises auf die Patenterteilung:
**16.07.86 Patentblatt 86/29**

(84) Benannte Vertragsstaaten:
**CH FR GB IT LI NL**

(56) Entgegenhaltungen:
**CH - A - 340 675**
**CH - A - 465 328**
**DE - A - 2 308 093**
**DE - A - 2 636 657**

(73) Patentinhaber: **Spindler & Hoyer GmbH & Co.,**
**Königsallee 23, D-3400 Göttingen (DE)**

(72) Erfinder: **Klingner, Hartmut, Ing.-grad., An der Tränke 12,**
**D-3400 Göttingen (DE)**

(74) Vertreter: **Patentanwälte Dipl.-Ing. Rudolf Bibrach**
**Dipl.-Ing. Elmar Rehberg, Pütterweg 6 Postfach 738,**
**D-3400 Göttingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen Bausatz zum Aufbau einer mikrooptischen Bank, der Stangen und Aufnahmeelemente zur Halterung von optischen Bauelementen aufweist, wobei die Aufnahmeelemente Durchbrechungen für das Hindurchtreten der Stangen besitzen und an den Stangen klemmend arretierbar sind.

Ein derartiger Bausatz ist aus der DE-A-2 636 657 bekannt. Er weist neben anderen Einzelteilen Stangen und Aufnahmeelemente auf, wobei die Aufnahmeelemente in der Regel aus quadratisch umrissenen Platten bestehen, die vier Durchbrechungen in den Eckbereichen aufweisen, durch die die Stangen hindurchgesteckt werden, so dass damit beispielsweise ein Aufbau für einen optischen Strahlengang realisiert werden kann. Die Aufnahmeelemente können randgeschlossene oder auch randoffene Durchbrechungen für das Hindurchstecken der Stangen aufweisen, wobei ein entsprechendes Spiel zwischen dem Durchmesser der Durchbrechungen und dem Durchmesser der Stangen vorgesehen ist, welches erst durch die Klemmung unter entsprechender Arretierwirkung beseitigt wird. Zu dieser Arretierung der Aufnahmeelemente an den Stangen sind als gesonderte, zusätzliche Bauteile Klemmstifte vorgesehen. Die Aufnahmeelemente weisen tangential zu den Durchbrechungen für die Stangen angeordnete Aussparungen für den Einsatz der Klemmstifte auf, wobei sich die Durchbrechungen und die Aussparungen um das für die Klemmung erforderliche Mass überdecken. Eine solche Klemmverbindung eröffnet zwar vorteilhafte Herstellmöglichkeiten, jedoch sind gesonderte Bauteile in Form der Klemmstifte erforderlich, die zudem noch gehandhabt werden müssen. Die Aufnahmeelemente besitzen zentrisch eine relativ grosse Öffnung, in die optische Bauelemente, beispielsweise Linsen, Filter, Spiegel usw. eingebracht werden können.

Die CH-A-340 675 zeigt eine Klemme zum Aneinanderbefestigen von zwei sich kreuzenden Stangen, wobei die Klemme eine randoffene Durchbrechung aufweist, die um 180° gegeneinander versetzt am inneren Umfang zwei Vorsprünge trägt. Diese Klemme findet in Verbindung mit einem Rohr Verwendung, welches – ebenfalls um 180° gegeneinander versetzt und auf die Vorsprünge der Klemme abgestimmt – zwei Längsschlitze begrenzter Länge aufweist, in die die Vorsprünge kraft- und formschlüssig einrasten. Damit wid eine unverrückbare Befestigung zweier sich kreuzender Stangen aneinander erzielt, wobei sowohl eine Drehbewegung um die Achse der die Schlitze tragenden Stange als auch eine Längsverschiebung der Stangen zueinander verhindert werden. Die Klemme kann somit nur dort angesetzt werden, wo auch die Längsschlitze vorhanden sind. Zum Entfernen der Klemme ist ein spezielles Werkzeug erforderlich. Eine solche Klemmbefestigung ist für eine mikrooptische Bank nicht verwendbar, weil die Fixierungsstellen der Teile aneinander variabel bleiben müssen und auch eine nachträgliche axiale gewollte Verschiebung möglich sein muss.

Der Erfindung liegt die Aufgabe zugrunde, einen Bausatz zum Aufbau einer mikrooptischen Bank aufzuzeigen, der ohne Verwendung von Werkzeug und ohne Einsatz von zusätzlichen Klemmelementen montier- und demontierbar sowie handhabbar ist. Die Handhabung soll auf einfache Weise möglich sein. Dabei kommt es weiterhin darauf an, in einen räumlich bereits fixierten Aufbau weitere Aufnahmeelemente einzusetzen oder derartige Aufnahmeelemente aus einem solchen Aufbau herausnehmen zu können, ohne zuvor den ganzen Aufbau auseinandernehmen zu müssen.

Erfindungsgemäss wird dies dadurch erreicht, dass die Aufnahmeelemente im Bereich der Durchbrechungen elastisch gestaltet sind und über den Umfang verteilt Noppen, Rippen oder sonstige Erhebungen aufweisen, die eine form- und kraftschlüssige Verbindung mit den durchgehend aus gezogenem Rundmaterial bestehenden Stangen bilden, so dass die Aufnahmeelemente ohne zusätzliche Fixiermittel an den Stangen gegen unbeabsichtigtes Verschieben klemmend fixiert sind. Zwischen den Aufnahmeelementen und den Stangen werden also lediglich solche Verbindungen gebildet, bei denen sich die über den Umfang verteilt angeordneten Noppen nach Einführung der Stange senkrecht zur Achse der Stange elastisch nachgiebig bewegen. Die Aufnahmeelemente und die Stange lassen sich somit ohne Werkzeug und ohne zusätzliche Elemente zusammenfügen, demontieren und handhaben. Durch die Formgebung der Aufnahmeelemente, abgestimmt auf deren Werkstoff, ist die elastische Gestaltung im Bereich der Durchbrechungen realisiert, so dass die Aufnahmeelemente einerseits gegen unbeabsichtigtes Verschieben ausreichend klemmend fixiert sind, andererseits aber durchaus axial verschoben werden können. Der Bausatz lässt sich überall dort einsetzen, wo keine höchste Präzision erforderlich ist. Er kann mit vorhandenen Bauteilen bekannter Aufbausysteme kombiniert werden. Der Bausatz eignet sich hervorragend zum Aufbau von optischen Instrumenten wie Lupen, Fernrohren, einfachen Mikroskopen, Projektionssystemen, Lichtschranken, Beleuchtungseinrichtungen usw. Die Grenzen der Anwendung ergeben sich hauptsächlich aus der Formbeständigkeit der Materialien für Stangen und Aufnahmeelemente. Während die Stangen aus präzise gezogenem Rundmaterial, sei es in Form von Rohren oder auch als Vollstäbe aus Stahl, Messing, Leichtmetall od. dgl. vorgesehen sind, werden die Aufnahmeelemente bevorzugt aus Kunststoff im Spritzverfahren gefertigt.

Die Aufnahmeelemente können randgeschlossene Durchbrechungen aufweisen, so dass es erforderlich ist, die Stangen stirnseitig durch die Aufnahmeelemente hindurchzustecken. Auch dabei findet ein elastisch nachgiebiges Auffedern im Bereich der randgeschlossenen Durchbrechungen statt. Die Durchbrechungen weisen auch hier über den Umfang verteilt die Noppen, Rippen oder sonstige Erhebungen auf. Es versteht sich, dass diese Erhebungen möglichst gleichmässig über den Umfang verteilt angeordnet sind und zwischen den Erhebungen Vertiefungen gebildet sind. Die Erhebungen schliessen einen Kreis aus, der vorzugsweise etwas kleineren Durchmesser, als es dem Durchmesser des Stangenmaterials entspricht, aufweist, während die Vertiefungen auf einem vergleichsweise grösseren Durchmesser angeordnet sind. Dies gilt auch für die Erhebungen an den randoffenen Durchbrechungen.

Die Aufnahmeelemente können zum nachträglichen Einsetzen ausschliesslich randoffene Durchbrechungen aufweisen und sind im Bereich der Durchbrechungen mit der für die Funktion von Schnappverbindungen erforderlichen Elastizität gestaltet. Damit wird die Handhabung ganz erheblich erleichtert, weil es bei einem optischen Aufbau oft vorkommt, nachträglich optische Elemente in den Strahlengang einzuführen oder aus dem Strahlengang herauszunehmen, ohne den übrigen Aufbau zu verändern. Die randoffenen Durchbrechungen weisen über einen etwas grösseren Umfangsbereich als 180° verteilt die Erhebungen auf. Es ist beispielsweise möglich, Aufnahmeelemente mit nur zwei, drei oder auch vier Durchbrechungen auszurüsten und damit auszubilden. Die randoffenen Durchbrechungen können mit seitlichen Anphasungen versehen sein, um derartige Aufnahmeelemente durch eine Dreh- bzw. Kippbewegung schnappend einsetzen zu können.

Bevorzugte Ausführungsbeispiele der Erfindung werden in der Zeichnung dargestellt und im folgenden beschrieben. Es zeigen:

Fig. 1 eine perspektivische Darstellung einer aus dem Bausatz errichteten einfachen mikrooptischen Bank;

Fig. 2 eine Ansicht eines Aufnahmeelementes in einer ersten Ausführungsform;

Fig. 3 eine Ansicht eines Aufnahmeelementes in einer zweiten Ausführungsform;

Fig. 4 eine Ansicht eines weiteren Aufnahmeelementes.

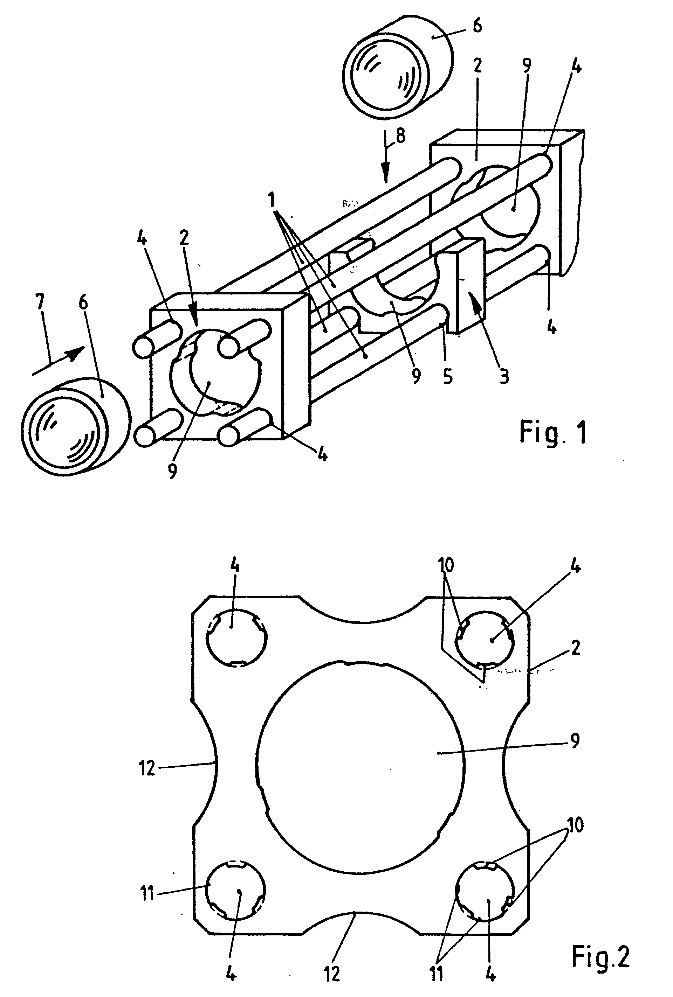

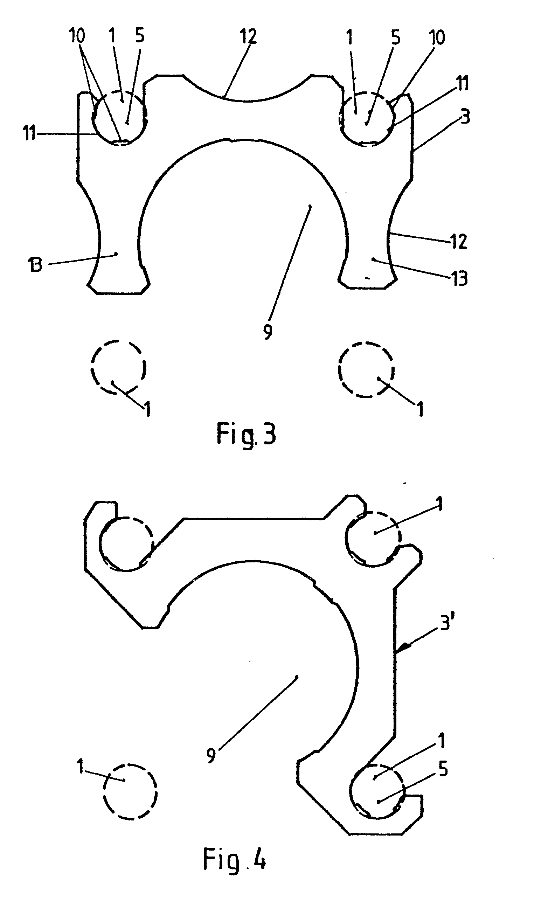

In Fig. 1 ist ein Ausschnitt bzw. eine einfache Ausführungsform einer mikrooptischen Bank dargestellt, wie sie mit Hilfe des Bausatzes errichtet werden kann. Auf den vier Stangen 1 sind zunächst zwei Aufnahmeelemente 2 aufgeschoben, wie sie im einzelnen in Fig. 2 dargestellt sind. In der Mitte befindet sich ein Aufnahmeelement 3, wie dies in der Draufsicht in Fig. 3 wiedergegeben ist. Das Aufnahmeelement 3 kann durchaus auch erst dann aufgeschoben bzw. eingesetzt werden, wenn zuvor die beiden Aufnahmeelemente 2 mit den Stangen 1 verbunden worden sind, so dass die räumliche Fixierung der Stangen 1 schon vorliegt. Die Aufnahmeelemente 2 bzw. 3 weisen randgeschlossene Durchbrechungen 4 und randoffene Durchbrechungen 5 auf. Durch die randgeschlossenen Durchbrechungen 4 müssen die Stangen 1 stirnseitig hindurchgesteckt werden, während es mit Hilfe der randoffenen Durchbrechungen 5 möglich ist, das betreffende Aufnahmeelement 3 seitlich auf die Stangen 1 aufzuschieben bzw. aufzudrücken. Einfache optische Elemente 6 lassen sich gemäss den Pfeilen 7 bzw.

8 in Öffnungen 9, die zentral entsprechend zu dem Rastersystem der Stangen 1 vorgesehen sind, an den Aufnahmeelementen 2 bzw. 3 einschieben.

Das Aufnahmeelement 2 gemäss Fig. 2 ist als Kunststoffspritzteil ausgebildet und besitzt einen plattenförmigen Körper, der zentral in der Mitte die Öffnung 9 sowie in den vier Eckbereichen die randgeschlossenen Durchbrechungen 4 aufweist. Der Umfang dieser Durchbrechungen 4 ist mit Noppen, Rippen od. dgl. 10 versehen, die möglichst gleichmässig über den Umfang verteilt angeordnet sind und zwischen denen sich Vertiefungen 11 befinden. Diese Formgebung ist auf die Form der Stangen 1 aus Rundmaterial abgestimmt, und zwar derart, dass die Durchbrechungen 4 (wie auch die Durchbrechungen 5 der Aufnahmeelemente gemäss Fig. 3 bis 6) form- und kraftschlüssige Verbindungen 10, 11 bilden. Der äussere Umfang der Aufnahmeelemente 2 ist mit Einbuchtungen 12 versehen, einerseits um die erforderliche Elastizität im Bereich der Verbindungen 10, 11 zu erzielen, andererseits um einen gedrängten Aufbau mit seitlichem Anschluss im Strahlengang nicht zu behindern.

Fig. 3 zeigt ein Aufnahmeelement 3 mit randoffenen Durchbrechungen 5. Auch hier sind die Durchbrechungen 5 mit Noppen, Rippen od. dgl. 10 und Vertiefungen 11 versehen, wobei die Noppen, Rippen od. dgl. 10 um etwas mehr als 180° auf dem Umfang verteilt angeordnet sind. Diese Aufnahmeelemente sind somit im Bereich ihrer Durchbrechungen (5) mit der für die Funktion von Schnappverbindungen erforderlichen Elastizität gestaltet. Die Aufnahmeelemente 3 besitzen seitlich Wangen 13, die im Abstand von dem gestrichelt angeordneten Rastermass der Stangen 1 enden, und zwar derart, dass das Einschieben bzw. Herausnehmen aus dem Aufbau ohne weiteres möglich ist.

Fig. 4 zeigt ein weiteres Aufnahmeelement 3' mit drei randoffenen Durchbrechungen 5. Auch hier sieht man, wie dieses Aufnahmeelement 3' mühelos in einen fertigen Aufbau eingebracht oder aus diesem entfernt werden kann.

Das Aufnahmeelement kann wie das Aufnahmeelement 2 vier Durchbrechungen besitzen, die jedoch hier als randoffene Durchbrechungen ausgebildet sind. Diese Durchbrechungen sind mit seitlichen Anphasungen versehen, damit dieses Aufnahmeelement durch eine Dreh- bzw. Kippbewegung in räumlich fixierte Stangen, beispielsweise gemäss Fig. 1, eingeschwenkt bzw. ausgeschwenkt werden kann.

**Patentansprüche**

1. Bausatz zum Aufbau einer mikrooptischen Bank, der Stangen (1) und Aufnahmeelemente (2) zur Halterung von optischen Bauelementen (6) aufweist, wobei die Aufnahmeelemente (2) Durchbrechungen (4) für das Hindurchtreten der Stangen besitzen und an den Stangen klemmend arretierbar sind, dadurch gekennzeichnet, dass die Aufnahmeelemente (2) im Bereich der Durchbrechungen (4, 5) elastisch gestaltet sind und über den Umfang verteilt Noppen, Rippen oder sonstige Erhebungen (10) aufweisen, die eine form- und kraftschlüssige Verbindung mit den durchgehend aus gezogenem Rundmaterial bestehenden Stangen·(1) bilden, so dass die Aufnahmeelemente (2) ohne zusätzliche Fixiermittel an den Stangen (1) gegen unbeabsichtigtes Verschieben klemmend fixiert sind.

2. Bausatz nach Anspruch 1, dadurch gekennzeichnet, dass die Aufnahmeelemente (2, 3) randgeschlossene Durchbrechungen (4) aufweisen.

3. Bausatz nach Anspruch 1, dadurch gekennzeichnet, dass die Aufnahmeelemente (3, 3') zum nachträglichen Einsetzen ausschliesslich randoffene Durchbrechungen (5) aufweisen und dass die Aufnahmeelemente im Bereich der Durchbrechungen mit der für die Funktion von Schnappverbindungen erforderlichen Elastizität gestattet sind.

4. Bausatz nach Anspruch 3, dadurch gekennzeichnet, dass die randoffenen Durchbrechungen (5) über einen etwas grösseren Umfangsbereich als 180° verteilt die Erhebungen (10) aufweisen.

5. Bausatz nach Anspruch 3 und 4, dadurch gekennzeichnet, dass die randoffenen Durchbrechungen (5) mit seitlichen Anphasungen versehen sind.

**Claims**

1. Kit, for the construction of a micro-optical bench, which displays rods (1) and receiving elements (2) for the mounting of optical components (6), wherein the receiving elements (2) possess perforations (4) for the passage of the rods and are clampably lockable to the rods, characterised thereby, that the receiving elements (2) are structured elastically in the region of the perforations (4, 5) and display knobs, ribs or other protrusions (10), which are distributed over the circumference and form a shape-locking and force-locking connection with the rods (1), which consist of continuous drawn round material, so that the receiving elements (2) are fixed clampingly against unintended displacement at the rods (1) without additional fixing means.

2. Kit according to claim 1, characterised thereby, that the receiving elements (2, 3) display perforations (4) with closed rims.

3. Kit according to claim 1, characterised thereby, that the receiving elements (3, 3') for the subsequent insertion display exclusively perforations (5), which are open at the rim, and that the receiving elements in the region of the perforations are provided with the elasticity required for the function of snap connections.

4. Kit according to claim 3, characterised thereby, that the perforations (5), which are open at the rim, display the protrusions (10) distributed over a circumferential region somewhat greater than 180°.

5. Kit according to claim 3 and 4, characterised thereby, that the perforations (5), which are open at the rim, are provided with lateral bevels.

**Revendications**

1. Groupe d'éléments de construction pour la réalisation d'un banc micro-optique, qui comporte des barres (1) et des éléments récepteurs (2) pour le maintien d'éléments de construction optiques (6), les éléments récepteurs (2) présentant des évidements (4), destinés à être traversés par les barres et pouvant être bloqués sur ces barres par pincement, caractérisé en ce que les éléments récepteurs (2) sont élastiques dans la zone des évidements (4, 5) et comportent des bossages, nervures ou autres renflements (10) répartis sur leur pourtour et formant une liaison à effet géométrique et mécanique avec les barres (1), constituées sur toute leur longueur d'un matériau rond et étiré, de sorte que les éléments récepteurs (2) soient fixés, sans moyens supplémentaires de fixation, par pincement sur ces barres (1), à l'encontre un déplacement intempestif.

2. Groupe d'éléments de construction suivant la revendication 1, caractérisé en ce que les éléments récepteurs (2, 3) présentent des évidements (4) à bord fermé.

3. Groupe d'éléments de construction suivant la revendication 1, caractérisé en ce que les éléments récepteurs (3, 3') présentent, pour l'insertion ultérieure, exclusivement des évidements (5) à bord ouvert et que ces éléments récepteurs ont, dans la zone des évidements, l'élasticité nécessaire au fonctionnement de liaisons élastiques.

4. Groupe d'éléments de construction suivant la revendication 3, caractérisé en ce que les évidements (5) à bord ouvert présentent des renflements (10) répartis sur une plage de pourtour légèrement supérieure à 180°.

5. Groupe d'éléments de construction suivant les revendications 3 et 4, caractérisé en ce que les évidements (5) à bord ouvert sont munis de chanfreins latéraux.

Fig. 1

Fig.2

Fig. 3

Fig. 4